# EUROPEAN PATENT SPECIFICATION

(11) **EP 3 575 564 B1**
(45) Date of publication and mention of the grant of the patent: **15.12.2021**
(21) Application number: 19163575.4
(22) Date of filing: 18.03.2019
(51) Int. Cl.: F01L 3/06, F01L 3/16

(54) **INTAKE AIR DELIVERY SYSTEM**
ANSAUGLUFTZUFUHRSYSTEM
SYSTÈME DE DISTRIBUTION D'AIR D'ADMISSION

(30) Priority: 20.03.2018 GB 201804405
(43) Date of publication of application: 04.12.2019
(73) Proprietor: Caterpillar Energy Solutions GmbH, 68167 Mannheim (DE)
(72) Inventor: WILSTERMANN, Thomas, 68526 Ladenburg (DE)
(74) Representative: BRP Renaud & Partner mbB Rechtsanwälte Patentanwälte Steuerberater

(56) References cited:
- DE-A1- 4 209 684
- DE-A1- 19 920 516
- US-A- 4 422 430

## Description

### Technical Field

The present disclosure relates to an intake air delivery system. More particularly, the present disclosure relates to the intake air delivery system associated with an internal combustion engine.

### Background

An internal combustion engine, such as a natural gas powered engine, for example, may introduce intake air or a charge air mixture into a cylinder thereof via an intake valve. The intake valve may lift with respect to a valve seat in order to provide a varying valve gap for introduction of the intake air or the charge air mixture into the cylinder. During a relatively higher valve lift, a flow separation may form in the intake air or the charge air mixture flowing through the valve gap.

In many situations, the flow separation may be formed due to deflection of the intake air or the charge air mixture by an edge of a valve seat or a valve seat ring adjacent to the valve gap. The flow separation may, in turn, result in formation of a region of increased turbulence and backflow in the valve gap. This region may reduce an effective area of the valve gap resulting in reduced amount of the intake air or the charge air mixture flowing through the valve gap, in turn, reducing performance of the engine. Hence, there is a need for an improved system for introduction of the intake air or the charge air mixture into the engine.

U.S. Patent Number 5,074,256 describes a lubricating system for a valve seat of an internal combustion engine. The system produces a lubricant oil film on the valve seat of a seat ring. At least a part of the seat ring providing a valve seat surface is made of a porous material readily containing lubricant oil. An outer cylindrical surface of the seat ring is formed with an annular groove along its circumferential direction. A cylinder head to which the seat ring is fastened is formed with an oil passage for feeding lubricant oil to the groove. Feeding of the lubricant oil through the oil passage to the groove causes the valve seat surface to contain lubricant oil. The lubricant oil thus contained produces a lubricant oil film on the valve seat surface, which prevents wear in a valve head and the valve seat surface.

German Patent No. DE4209684A1 discloses a cylinder of an internal combustion engine that has an inlet manifold and an exhaust manifold meeting in a gas transfer section bounded by an inlet and outlet valves set at angles. Swirl effects at the manifold edges, generated by tight contours and by the valve guides, are reduced by gas compensation ducts linked to a variable gas control. Gas is either taken from the swirl areas, exhaust gases recycled, air pumped into the swirl areas or a combination of the options are applied to optimise the gas flow through the manifolds. The air pressure is generated by an air pump and the suction by a venturi pump. Two multi-way control valves and a processor control regulate the compensation.

US Patent No. US4422430A describes a method that solves the problem of improving the preparation of an air-fuel mixture for a combustion processes thereof by its additional whirling and gasification. The method according to the disclosure consists in the creation of turbulence and gasification of the mixture by exhaust gases collected directly from the combustion chamber of the engine cylinder in which a working stroke is being performed, whereby the flow to the co-operating cylinder in which a suction stroke is being performed is controlled by the duration of opening the suction valve. The system for the creation of turbulence and gasification of the air-fuel mixture according to the invention has conduits connecting alternately a combustion chamber of a cylinder with exhaust ducts in faces of seats of suction valves, whereby the inlets of the conduits are provided with an insert with a throttle nozzle or with an insert with more than one throttle nozzle. The invention can be applied in spark-ignition four-stroke internal combustion engines with an even number of cylinders.

German Patent No. DE19920516A1 discloses a method that involves producing a vacuum in each inlet channel before the inlet valve using a vacuum pump, at least during the cold start phase, to suck up condensed fuel droplets. The vacuum pump is switched on before the cold start phase and produces a vacuum in a reservoir that is connected to the inlet channel when starting. An Independent claim is also included for an internal combustion engine with fuel injection in each inlet channel before the inlet valves.

### Summary of the Disclosure

In an aspect of the present disclosure, an intake air delivery system for an engine is provided. The intake air delivery system includes a valve seat ring. The intake air delivery system includes an intake valve provided in association with the valve seat ring. The intake valve is adapted to contact the valve seat ring in a closed position of the intake valve. The intake valve is also adapted to provide a valve gap with respect to the valve seat ring in an open position of the intake valve. The intake air delivery system also includes at least one bore provided in the valve seat ring. The at least one bore is provided in selective fluid communication with the valve gap. The intake air delivery system further includes a conduit provided in fluid communication with the at least one bore and a vacuum pump. Each of the conduit and the at least one bore is adapted to provide a suction pressure of the vacuum pump to a portion of the valve gap adjacent to the valve seat ring.

In another aspect of the present disclosure, an engine is provided. The engine includes an engine block and a cylinder head mounted on the engine block. The engine also includes a plurality of cylinders provided in the engine block. The engine further includes an intake air delivery system. The intake air delivery system includes at least one valve seat ring provided in association with each of the plurality of cylinders. The intake air delivery system includes an intake valve provided in association with the at least one valve seat ring. The intake valve is adapted to contact the at least one valve seat ring in a closed position of the intake valve. The intake valve is also adapted to provide a valve gap with respect to the at least one valve seat ring in an open position of the intake valve. The intake air delivery system also includes at least one bore provided in the at least one valve seat ring. The at least one bore is provided in selective fluid communication with the valve gap. The intake air delivery system further includes a conduit provided in fluid communication with the at least one bore and a source of suction pressure. Each of the conduit and the at least one bore is adapted to provide a suction pressure of the source of suction pressure to a portion of the valve gap adjacent to the at least one valve seat ring.

In yet another aspect of the present disclosure, a method for limiting a flow separation and a backflow of an intake air through an intake valve of an engine is provided. The method includes providing at least one bore in a valve seat ring associated with the intake valve. The method includes providing fluid communication between the at least one bore and a valve gap associated with the intake valve in an open position of the intake valve. The method includes providing a flow of the intake air through the valve gap. The method includes forming the flow separation and the backflow of the intake air adjacent to the valve seat ring. The method also includes providing a suction pressure in the valve gap adjacent to the valve seat ring through the at least one bore. The method further includes limiting the flow separation and the backflow of the intake air using the suction pressure.

Other features and aspects of this disclosure will be apparent from the following description and the accompanying drawings.

### Brief Description of the Drawings

FIG. 1 is a perspective view of an exemplary engine, according to one embodiment of the present disclosure;
FIG. 2 is a top view of an exemplary valve seat ring associated with the engine, according to one embodiment of the present disclosure;
FIG. 3 is a partial cross-sectional view of the valve seat ring along a section A-A (shown in FIG. 2), according to one embodiment of the present disclosure;
FIG. 4 is a schematic representation of an intake air delivery system for the engine, according to one embodiment of the present disclosure;
FIG. 5 is another partial cross-sectional view of the valve seat ring along the section A-A, according to one embodiment of the present disclosure; and
FIG. 6 is a flowchart illustrating a method of working of the intake air delivery system of FIG. 4, according to one embodiment of the present disclosure.

### Detailed Description

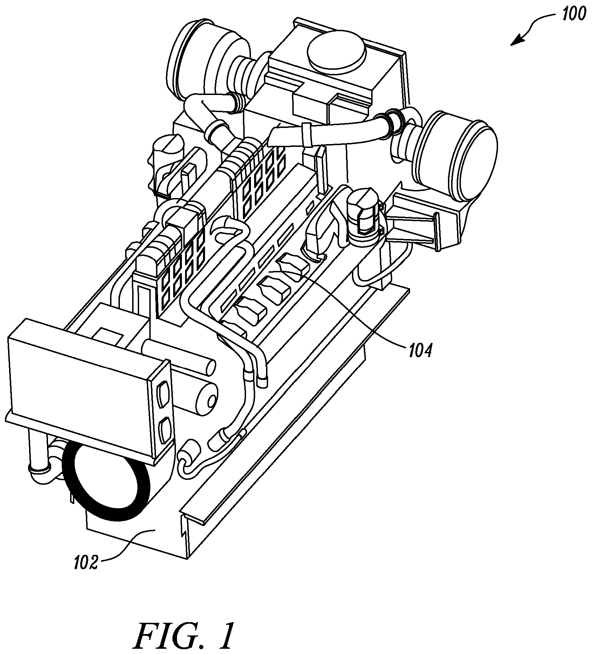

Wherever possible, the same reference numbers will be used throughout the drawings to refer to the same or the like parts. Referring to FIG. 1, an exemplary engine 100 is illustrated. The engine 100 is an internal combustion engine powered by any fuel known in the art, such as natural gas, gasoline, and/or a combination thereof. In some embodiments, the engine 100 may be associated with a machine (not shown) including, but not limited to, a locomotive, a marine vessel, a land vehicle, and a power generator. The engine 100 and/or the machine may be employed in any industry including, but not limited to, construction, agriculture, forestry, mining, transportation, waste management, aviation, marine, material handling, and power generation.

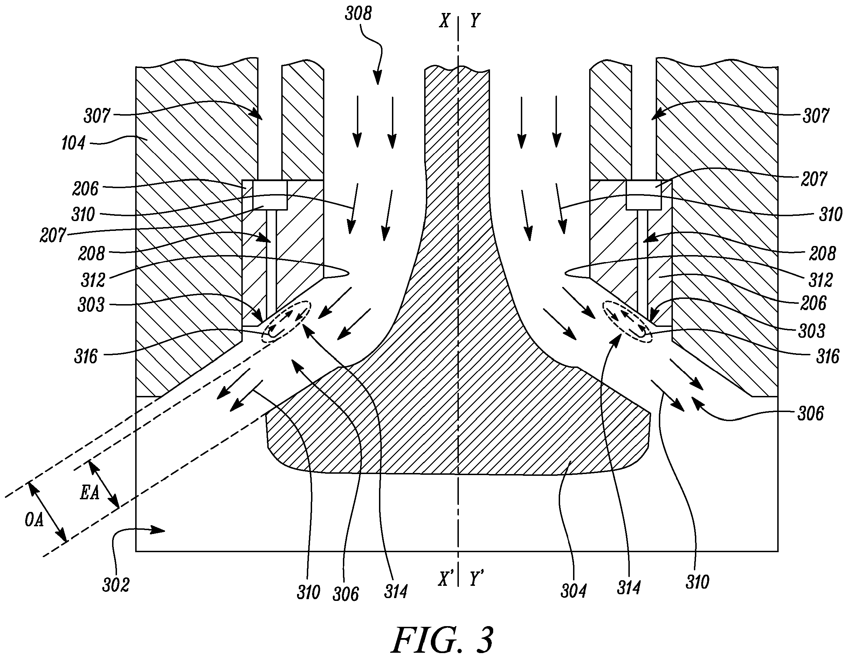

The engine 100 includes an engine block 102. The engine block 102 may include one or more cylinders 302 (shown in FIG. 3) provided therein. The cylinders 302 may be arranged in any configuration including, but not limited to, an inline, radial, and "V", among others. Each of the cylinders 302 is adapted to receive a piston (not shown) therein. The engine 100 also includes a cylinder head 104 mounted on the engine block 102. The cylinder head 104 may house one or more components and/or systems (not shown) of the engine 100, such as an intake manifold, an exhaust manifold, a valve train, and sensors, among others. Additionally, the engine 100 may include various other components and/or systems (not shown) including, but not limited to, a crankcase, a fuel system, a cooling system, a lubrication system, a turbocharger, a supercharger, an exhaust gas recirculation system, and peripheries, among others.

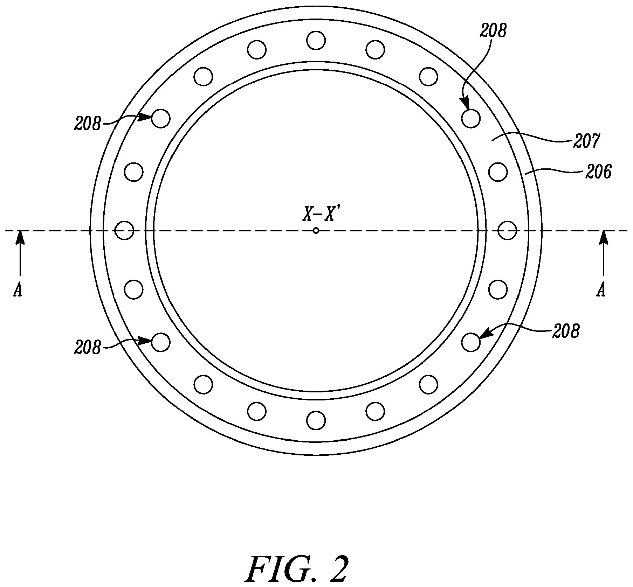

Referring to FIG. 2, a top view of an exemplary valve seat ring 206 is illustrated. The valve seat ring 206 is adapted to be disposed in the cylinder head 104. It should be noted that the engine 100 may include one or more valve seat rings 206 associated with each of the cylinders 302, based on application requirements. The valve seat ring 206 includes a substantially circular configuration defining an axis X-X' thereof. The valve seat ring 206 includes a circumferential groove 207 provided thereon.

The valve seat ring 206 also includes a plurality of ring bores 208 provided thereon in association with the circumferential groove 207. Each of the plurality of ring bores 208 is disposed circumferentially on the valve seat ring 206 and spaced apart with respect to one another. Also, in the illustrated embodiment, each of the plurality of ring bores 208 is disposed substantially parallel with respect to the axis X-X'. In other embodiments, one or more of the plurality of ring bores 208 may be disposed at any angle with respect to the axis X-X'.

Referring to FIG. 3, an exemplary partial cross-sectional view of the valve seat ring 206 along a section A-A (shown in FIG. 2) disposed in the cylinder head 104, and an intake valve 304 associated with the valve seat ring 206 is illustrated. The valve seat ring 206 defines a valve seat 303 thereon. The intake valve 304 defines a valve axis Y-Y' thereof. The intake valve 304 is disposed coaxially with respect to the valve seat ring 206. The intake valve 304 is adapted to translate between an open position and a closed position (not shown) along the valve axis Y-Y' with respect to the valve seat ring 206 and the valve seat 303.

Accordingly, the intake valve 304 is adapted to contact the valve seat ring 206 in the closed position. Also, the intake valve 304 is adapted to provide a valve gap 306 with respect to the valve seat ring 206 in the open position. Further, in the open position of the intake valve 304, the ring bore 208 is adapted to provide fluid communication between the valve gap 306 and a conduit 307 provided in the cylinder head 104. In the closed position of the intake valve 304, the intake valve 304 may contact the valve seat ring 206 and disconnect fluid communication between the ring bore 208 and the valve gap 306.

During operation of the engine 100, in the open position of the intake valve 304, intake air flows from an intake manifold 308 in to the respective cylinder 302 via the valve gap 306. It should be noted that the intake air, in many applications, may include an air-fuel mixture, such as an air-gasoline mixture in case of a gasoline powered engine, an air-gas mixture in case of a natural gas powered engine, and so on, for example. During a relatively small valve lift, the intake air may flow through the valve gap 306 with limited turbulence as shown by arrows 310. As the valve lift may increase, the valve gap 306 may increase resulting in an increased overall area "OA" of the valve gap 306.

In many situations, an edge 312 of the valve seat ring 206 may deflect the intake air flowing through the valve gap 306 in a manner such that a region 314 of flow separation may be formed adjacent to the valve seat ring 206. In the illustrated embodiment, the edge 312 includes a sharply angled configuration. It should be noted that, in other embodiments, the edge 312 may include another angled configuration, such as a beveled configuration, a chamfered configuration, or a curved configuration, such as a filleted configuration, to provide a relatively smooth surface, and so on, based on application requirements.

Also, it should be noted, that in some embodiments, the flow separation may be formed due to deflection of the intake air flowing through the valve gap 306 by the intake valve 304. In such a situation, an overall geometry of the intake valve 304 may deflect the intake air away from the intake valve 304. In yet other embodiments, the flow separation may be formed due to a combined effect of the configuration of the edge 312 and the overall geometry of the intake valve 304 and/or the valve gap 306.

The flow separation of the intake air may further result in increased turbulence and/or backflow of the intake air as shown by arrows 316. The region 314, as a result, may reduce an effective area "EA" of the valve gap 306 with respect to the overall area "OA" of the valve gap 306 based on the valve gap 306 exceeding a threshold defined by the valve seat ring 206 and the overall geometry of the intake valve 304. The reduced effective area "EA" may result in reduced intake air flow through the valve gap 306 with increase in the valve lift, in turn, reducing an overall performance of the engine 100.

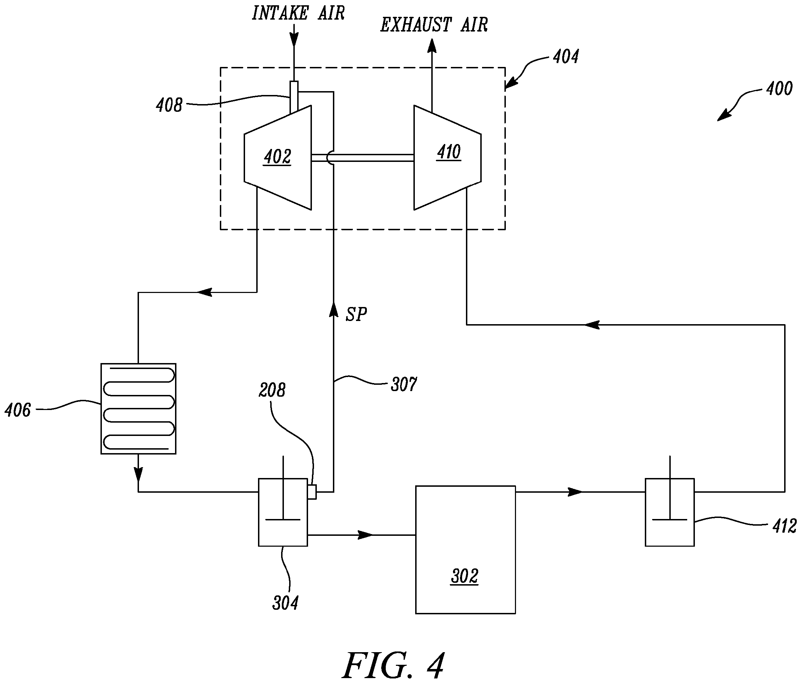

Referring to FIG. 4, a schematic representation of an intake air delivery system 400 for the engine 100 is illustrated. The intake air delivery system 400 will be hereinafter interchangeably referred to as the "system 400". The system 400 includes the intake valve 304 associated with the cylinder 302. The intake valve 304 is provided in fluid communication with a compressor section 402 of a turbocharger 404 via an intercooler 406. The compressor section 402 of the turbocharger 404 is adapted to receive ambient intake air via an inlet 408 and compress the received intake air to a higher pressure.

The compressor section 402 of the turbocharger 404 is operably coupled to a turbine section 410 of the turbocharger 404. The turbine section 410 is adapted to receive exhaust gas from the cylinder 302 via an exhaust valve 412 associated with the cylinder 302. The turbine section 410 is adapted to convert exhaust energy of the exhaust gas to mechanical energy and transfer the mechanical energy to the compressor section 402 of the turbocharger 404. The compressed intake air is then cooled in the intercooler 406 downstream of the compressor section 402. The intercooler 406 may be any heat exchanger known in the art used for engine applications. The intake air is further supplied to the cylinder 302 via the intake valve 304.

Additionally, the ring bore 208 associated with the valve seat ring 206 is provided in fluid communication with the inlet 408 of the compressor section 402 of the turbocharger 404 via the conduit 307. It should be noted that, in other embodiments, the conduit 307 and the ring bore 208 may be provided in fluid communication with an inlet of a compressor section of a supercharger (not shown), or an external source of suction pressure (not shown), and so on, based on application requirements.

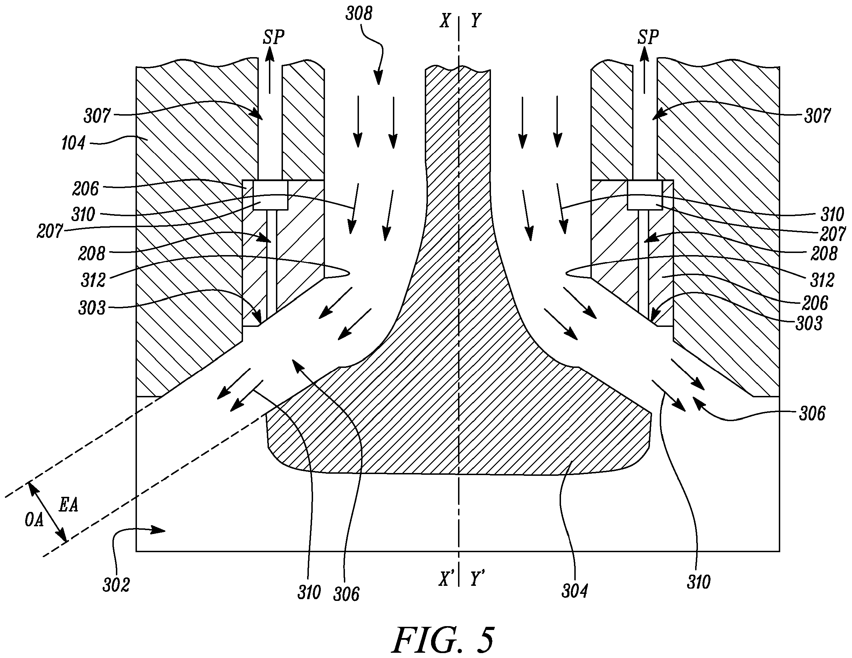

Based on the valve gap 306 exceeding the threshold, a suction pressure "SP" of the compressor section 402 is provided to a portion of the valve gap 306 adjacent to the valve seat ring 206. More specifically, referring to FIG. 5, the suction pressure "SP" is provided in the region 314 adjacent to the valve seat ring 206 via the conduit 307 and the ring bore 208. The suction pressure "SP" limits the flow separation and the backflow of the intake air in the region 314. As such, the suction pressure "SP" provides the flow of the intake air through the region 314, in turn, increasing the effective area "EA" of the valve gap 306 up to the overall area "OA" of the valve gap 306.

### Industrial Applicability

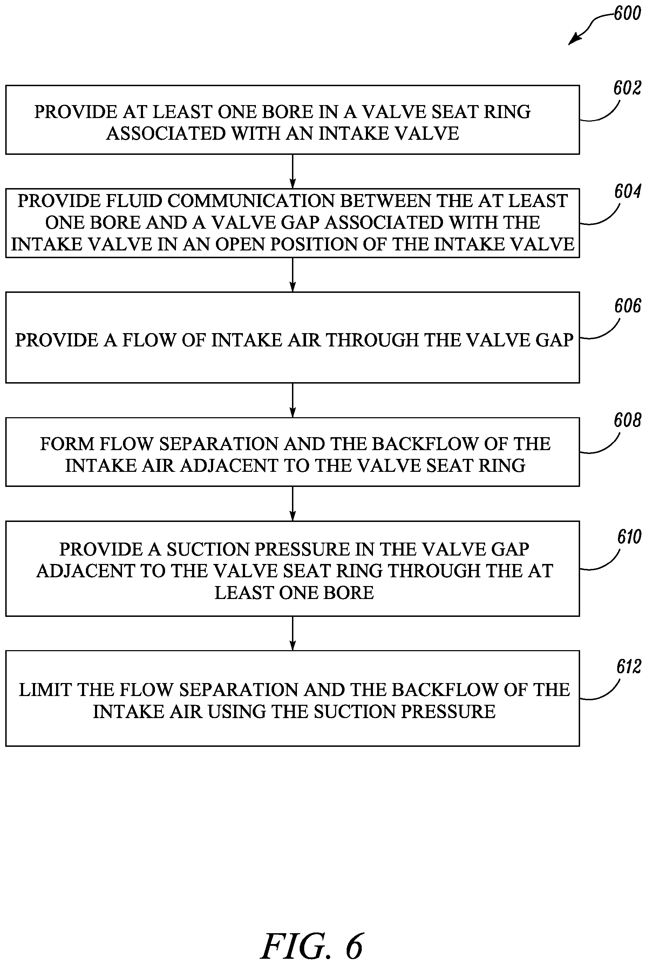

The present disclosure relates to a method 600 of working of the intake air delivery system 400. Referring to FIG. 6, a flowchart of the method 600 is illustrated. At step 602, at least one bore is provided in the valve seat ring 206 associated with the intake valve 304. More specifically, the conduit 307 is provided in the cylinder head 104 and the ring bore 208 is provided in the valve seat ring 206. The ring bore 208 is axially aligned and in fluid communication with the conduit 307.

At step 604, fluid communication is provided between the at least one bore and the valve gap 306 associated with the intake valve 304 in the open position of the intake valve 304. More specifically, fluid communication is provided between the conduit 307, the ring bore 208 and the valve gap 306 in the open position of the intake valve 304. At step 606, the flow of the intake air is provided through the valve gap 306. More specifically, the flow of the intake air is provided through the valve gap 306 in the open position of the intake valve 304, such as during an intake stroke of the engine 100.

At step 608, the flow separation and the backflow of the intake air is formed adjacent to the valve seat ring 206. More specifically, the flow separation and the backflow are formed due to deflection of the intake air by the edge 312 of the valve seat ring 206 and/or the overall geometry of the intake valve 304, resulting in the formation of the region 314 of increased turbulence. Also, the flow separation and the resulting backflow and the turbulence is formed based on the valve gap 306 exceeding the threshold.

At step 610, the suction pressure "SP" is provided in the valve gap 306 adjacent to the valve seat ring 206 through the at least one bore. More specifically, in the illustrated embodiment, the suction pressure "SP" of the compressor section 402 of the turbocharger 404 is provided adjacent to the valve seat ring 206 through each of the conduit 307 and the ring bore 208. In other embodiments, the suction pressure "SP" may be provided using the supercharger, the external source of suction pressure, and so on. At step 612, the flow separation and the backflow of the intake air is limited using the suction pressure "SP".

As such, the suction pressure "SP" provides to limit formation of the region 314 of the flow separation, the increased turbulence, and the backflow, in turn, increasing the effective area "EA" of the valve gap 306 equal to the overall area "OA" of the valve gap 306. Accordingly, a volume of the intake air may be increased during increasing valve lift of the intake valve 304, thus, improving performance of the engine 100. The system 400 provides a simple, efficient, and cost-effective method of limiting the flow separation in the valve gap 306. The system 400 employs already available components on the engine 100, such as the turbocharger 404 or the supercharger, in turn, reducing system cost. The system 400 may be retrofitted in any engine with little or no modification to the existing system.

## Claims

1. An intake air delivery system (400) for an engine (100), the intake air delivery system (400) comprising:
a valve seat ring (206);
an intake valve (304) provided in association with the valve seat ring (206), the intake valve (304) adapted to contact the valve seat ring (206) in a closed position of the intake valve (304), the intake valve (304) adapted to provide a valve gap (306) with respect to the valve seat ring (206) in an open position of the intake valve (304);
at least one bore (208) provided in the valve seat ring (206), the at least one bore (208) provided in selective fluid communication with the valve gap (306); and
a conduit (307) provided in fluid communication with the at least one bore (208) and an inlet of a compressor section of a supercharger or an external vacuum pump, wherein each of the conduit (307) and the at least one bore (208) is adapted to provide a suction pressure of the inlet of a compressor section of a supercharger or an external vacuum pump to a portion of the valve gap (306) adjacent to the valve seat ring (206).

2. The intake air delivery system (400) of claim 1, wherein the intake air is an air-fuel mixture.

3. The intake air delivery system (400) of claim 1, wherein the conduit (307) is provided in a cylinder head (104) associated with the engine (100).

4. The intake air delivery system (400) of claim 1, wherein the at least one bore (208) is provided in fluid communication with the valve gap (306) in the open position of the intake valve (304).

5. An engine (100) comprising:
an engine block (102);
a cylinder head (104) mounted on the engine block (102);
a plurality of cylinders provided in the engine block (102); and
an intake air delivery system (400) comprising:
at least one valve seat ring (206) provided in association with each of the plurality of cylinders;
an intake valve (304) provided in association with the at least one valve seat ring (206), the intake valve (304) adapted to contact the at least one valve seat ring (206) in a closed position of the intake valve (304), the intake valve (304) adapted to provide a valve gap (306) with respect to the at least one valve seat ring (206) in an open position of the intake valve (304);
at least one bore (208) provided in the at least one valve seat ring (206), the at least one bore (208) provided in selective fluid communication with the valve gap (306); and
a conduit (307) provided in fluid communication with the at least one bore (208) and an inlet of a compressor section of a supercharger or an external vacuum pump, wherein each of the conduit (307) and the at least one bore (208) is adapted to provide a suction pressure of the inlet of a compressor section of a supercharger or an external vacuum pump to a portion of the valve gap (306) adjacent to the at least one valve seat ring (206).

6. The engine (100) of claim 5, wherein the intake air is an air-fuel mixture.

7. The engine (100) of claim 5, wherein the conduit (307) is provided in the cylinder head (104).

8. The engine (100) of claim 5, wherein the at least one bore (208) is provided in fluid communication with the valve gap (306) in the open position of the intake valve (304).

9. The engine (100) of claim 5, wherein the at least one bore (208) includes a plurality of bores (208) disposed adjacent and spaced apart with respect to one another.

10. The engine (100) of claim 5 is at least one of a gasoline powered engine (100) and a natural gas powered engine (100).

11. A method (600) for limiting a flow separation and a backflow of an intake air through an intake valve (304) of an engine (100), the method (600) comprising:
providing at least one bore (208) in a valve seat ring (206) associated with the intake valve (304);
providing fluid communication between the at least one bore (208) and a valve gap (306) associated with the intake valve (304) in an open position of the intake valve (304);
providing a flow of the intake air through the valve gap (306);
forming the flow separation and the backflow of the intake air adjacent to the valve seat ring (206);
providing a suction pressure in the valve gap (306) adjacent to the valve seat ring (206) through the at least one bore (208); and
limiting the flow separation and the backflow of the intake air using the suction pressure. 12. The method (600) of claim 11, wherein the flow separation is formed based on the valve gap (306) exceeding a threshold defined by the valve seat ring (206) and a geometry of the intake valve (304).

## Patentansprüche

1. Ansaugluftzufuhrsystem (400) für einen Motor (100), wobei das Ansaugluftzufuhrsystem (400) Folgendes umfasst:
einen Ventilsitzring (206);
ein Einlassventil (304), das in Verbindung mit dem Ventilsitzring (206) bereitgestellt ist, wobei das Einlassventil (304) angepasst ist, um den Ventilsitzring (206) in einer geschlossenen Position des Einlassventils (304) zu berühren, wobei das Einlassventil (304) angepasst ist, um einen Ventilspalt (306) in Bezug auf den Ventilsitzring (206) in einer offenen Position des Einlassventils (304) bereitzustellen;
mindestens eine Bohrung (208), die in dem Ventilsitzring (206) bereitgestellt ist, wobei die mindestens eine Bohrung (208) in selektiver Fluidverbindung mit dem Ventilspalt (306) bereitgestellt ist; und
eine Leitung (307), die in Fluidverbindung mit der mindestens einen Bohrung (208) und einem Einlass eines Verdichterabschnitts eines Laders oder einer externen Vakuumpumpe bereitgestellt ist, wobei sowohl die Leitung (307) als auch die mindestens eine Bohrung (208) ausgelegt sind, einen Saugdruck des Einlasses eines Verdichterabschnitts eines Laders oder einer externen Vakuumpumpe an einen Abschnitt des Ventilspalts (306) angrenzend an den Ventilsitzring (206) bereitzustellen.

2. Ansaugluftzufuhrsystem (400) nach Anspruch 1, wobei die Ansaugluft ein Luft-Kraftstoff-Gemisch ist.

3. Ansaugluftzufuhrsystem (400) nach Anspruch 1, wobei die Leitung (307) in einem Zylinderkopf (104) bereitgestellt ist, der dem Motor (100) zugeordnet ist.

4. Ansaugluftzufuhrsystem (400) nach Anspruch 1, wobei die mindestens eine Bohrung (208) in Fluidverbindung mit dem Ventilspalt (306) in der offenen Position des Einlassventils (304) bereitgestellt ist.

5. Motor (100), umfassend:
einen Motorblock (102);
einen Zylinderkopf (104), der an dem Motorblock (102) montiert ist;
eine Vielzahl von Zylindern, die in dem Motorblock (102) bereitgestellt sind; und
ein Ansaugluftzufuhrsystem (400), umfassend:
mindestens einen Ventilsitzring (206), der in Verbindung mit jedem der Vielzahl von Zylindern bereitgestellt ist;
ein Einlassventil (304), das in Verbindung mit dem mindestens einen Ventilsitzring (206) bereitgestellt ist, wobei das Einlassventil (304) angepasst ist, um den mindestens einen Ventilsitzring (206) in einer geschlossenen Position des Einlassventils (304) zu berühren, wobei das Einlassventil (304) angepasst ist, um einen Ventilspalt (306) in Bezug auf den mindestens einen Ventilsitzring (206) in einer offenen Position des Einlassventils (304) bereitzustellen;
mindestens eine Bohrung (208), die in dem mindestens einen Ventilsitzring (206) bereitgestellt ist, wobei die mindestens eine Bohrung (208) in selektiver Fluidverbindung mit dem Ventilspalt (306) bereitgestellt ist; und
eine Leitung (307), die in Fluidverbindung mit der mindestens einen Bohrung (208) und einem Einlass eines Verdichterabschnitts eines Laders oder einer externen Vakuumpumpe bereitgestellt ist, wobei sowohl die Leitung (307) als auch die mindestens einen Bohrung (208) ausgelegt sind, einen Saugdruck des Einlasses eines Verdichterabschnitts eines Laders oder einer externen Vakuumpumpe an einen Abschnitt des Ventilspalts (306) angrenzend an den mindestens einen Ventilsitzring (206) bereitzustellen.

6. Motor (100) nach Anspruch 5, wobei die Ansaugluft ein Luft-Kraftstoff-Gemisch ist.

7. Motor (100) nach Anspruch 5, wobei die Leitung (307) in dem Zylinderkopf (104) bereitgestellt ist.

8. Motor (100) nach Anspruch 5, wobei die mindestens eine Bohrung (208) in Fluidverbindung mit dem Ventilspalt (306) in der offenen Position des Einlassventils (304) bereitgestellt ist.

9. Motor (100) nach Anspruch 5, wobei die mindestens eine Bohrung (208) eine Vielzahl von Bohrungen (208) einschließt, die benachbart und voneinander beabstandet angeordnet sind.

10. Motor (100) nach Anspruch 5 ist mindestens eines von einem benzinbetriebenen Motor (100) und einem erdgasbetriebenen Motor (100).

11. Verfahren (600) zum Begrenzen einer Strömungsablösung und einer Rückströmung einer Einlassluft durch ein Einlassventil (304) eines Motors (100), wobei das Verfahren (600) Folgendes umfasst:
Bereitstellen mindestens einer Bohrung (208) in einem Ventilsitzring (206), der dem Einlassventil (304) zugeordnet ist;
Bereitstellen einer Fluidverbindung zwischen der mindestens einen Bohrung (208) und einem Ventilspalt (306), der dem Einlassventil (304) zugeordnet ist, in einer offenen Position des Einlassventils (304);
Bereitstellen eines Ansaugluftstroms durch den Ventilspalt (306);
Bilden der Strömungsablösung und der Rückströmung der Ansaugluft angrenzend an den Ventilsitzring (206);
Bereitstellen eines Saugdrucks in dem Ventilspalt (306) angrenzend an den Ventilsitzring (206) durch die mindestens eine Bohrung (208); und
Begrenzen der Strömungsablösung und der Rückströmung der Ansaugluft unter Verwendung des Saugdrucks. 12. Verfahren (600) nach Anspruch 11, wobei die Strömungsablösung auf Grundlage dessen gebildet wird, dass der Ventilspalt (306) einen Schwellenwert überschreitet, der durch den Ventilsitzring (206) und eine Geometrie des Einlassventils (304) definiert ist.

## Revendications

1. Système de distribution d'air d'admission (400) pour un moteur (100), le système de distribution d'air d'admission (400) comprenant :
une bague de siège de soupape (206) ;
une soupape d'admission (304) fournie en association avec la bague de siège de soupape (206), la soupape d'admission (304) étant adaptée pour entrer en contact avec la bague de siège de soupape (206) dans une position fermée de la soupape d'admission (304), la soupape d'admission (304) étant adaptée pour fournir un dégagement de soupape (306) par rapport à la bague de siège de soupape (206) dans une position ouverte de la soupape d'admission (304) ;
au moins un alésage (208) fourni dans la bague de siège de soupape (206), l'au moins un alésage (208) fourni pour être en communication fluidique sélective avec le dégagement de soupape (306) ; et
un conduit (307) fourni pour être en communication fluidique avec l'au moins un alésage (208) et une entrée d'une section de compresseur d'un surpresseur ou d'une pompe à vide externe, dans lequel chacun du conduit (307) et de l'au moins un alésage (208) est adapté pour fournir une pression d'aspiration de l'entrée d'une section de compresseur d'un surpresseur ou d'une pompe à vide externe à une partie du dégagement de soupape (306) adjacent à la bague de siège de soupape (206).

2. Système de distribution d'air d'admission (400) selon la revendication 1, dans lequel l'air d'admission est un mélange air-carburant.

3. Système de distribution d'air d'admission (400) selon la revendication 1, dans lequel le conduit (307) est fourni dans une culasse (104) associée au moteur (100).

4. Système de distribution d'air d'admission (400) selon la revendication 1, dans lequel l'au moins un alésage (208) est fourni pour être en communication fluidique avec le dégagement de soupape (306) dans la position ouverte de la soupape d'admission (304).

5. Moteur (100) comprenant :
un bloc-moteur (102) ;
une culasse (104) montée sur le bloc-moteur (102) ;
une pluralité de cylindres fournis dans le bloc-moteur (102) ; et
un système de distribution d'air d'admission (400) comprenant :
au moins une bague de siège de soupape (206) fournie en association avec chacun de la pluralité de cylindres ;
une soupape d'admission (304) fournie en association avec l'au moins une bague de siège de soupape (206), la soupape d'admission (304) étant adaptée pour entrer en contact avec l'au moins une bague de siège de soupape (206) dans une position fermée de la soupape d'admission (304), la soupape d'admission (304) étant adaptée pour fournir un dégagement de soupape (306) par rapport à l'au moins une bague de siège de soupape (206) dans une position ouverte de la soupape d'admission (304) ;
au moins un alésage (208) fourni dans l'au moins une bague de siège de soupape (206), l'au moins un alésage (208) étant fourni pour être en communication fluidique sélective avec le dégagement de soupape (306) ; et
un conduit (307) fourni pour être en communication fluidique avec l'au moins un alésage (208) et une entrée d'une section de compresseur d'un surpresseur ou d'une pompe à vide externe, dans lequel chacun du conduit (307) et de l'au moins un alésage (208) est adapté pour fournir une pression d'aspiration de l'entrée d'une section de compresseur d'un surpresseur ou d'une pompe à vide externe à une partie du dégagement de soupape (306) adjacente à l'au moins une bague de siège de soupape (206).

6. Moteur (100) selon la revendication 5, dans lequel l'air d'admission est un mélange air-carburant.

7. Moteur (100) selon la revendication 5, dans lequel le conduit (307) est fourni dans la culasse (104).

8. Moteur (100) selon la revendication 5, dans lequel l'au moins un alésage (208) est fourni pour être en communication fluidique avec le dégagement de soupape (306) dans la position ouverte de la soupape d'admission (304).

9. Moteur (100) selon la revendication 5, dans lequel l'au moins un alésage (208) inclut une pluralité d'alésages (208) disposés de manière adjacente et espacés les uns par rapport aux autres.

10. Moteur (100) selon la revendication 5 qui est au moins l'un d'un moteur à essence (100) et d'un moteur à gaz naturel (100).

11. Procédé (600) pour limiter une séparation d'écoulement et un refoulement d'un air d'admission à travers une soupape d'admission (304) d'un moteur (100), le procédé (600) comprenant :
la fourniture d'au moins un alésage (208) dans une bague de siège de soupape (206) associée à la soupape d'admission (304) ;
la fourniture d'une communication fluidique entre l'au moins un alésage (208) et un dégagement de soupape (306) associé à la soupape d'admission (304) dans une position ouverte de la soupape d'admission (304) ;
la fourniture d'un écoulement de l'air d'admission à travers le dégagement de soupape (306) ;
la formation de la séparation d'écoulement et du refoulement de l'air d'admission adjacent à la bague de siège de soupape (206) ;
la fourniture d'une pression d'aspiration dans le dégagement de soupape (306) adjacent à la bague de siège de soupape (206) à travers l'au moins un alésage (208) ; et
la limitation de la séparation d'écoulement et du refoulement de l'air d'admission en utilisant la pression d'aspiration. 12. Procédé (600) selon la revendication 11, dans lequel la séparation d'écoulement est formée en fonction du dégagement de soupape (306) dépassant un seuil défini par la bague de siège de soupape (206) et d'une géométrie de la soupape d'admission (304).
